# EUROPEAN PATENT SPECIFICATION

(11) **EP 0 744 244 B1**
(45) Date of publication and mention of the grant of the patent: **25.08.1999**
(21) Application number: 96830291.9
(22) Date of filing: 21.05.1996
(51) Int. Cl.: B23Q 7/04, B23Q 1/66

(54) **Machine tool for the machining of elongated elements with cantilever-mounted workpiece holder**
Werkzeugmaschine zum Bearbeiten von länglichen Elementen mit als Ausleger montierten Werkstückträgern
Machine-outil pour l'usinage d'éléments allongés avec porte-pièces en porte-à-faux

(30) Priority: 24.05.1995 IT FI950112
(43) Date of publication of application: 27.11.1996
(73) Proprietor: DITTA BACCI PAOLINO DI GIUSEPPE BACCI DI AGOSTINO BACCI, I-56021 Cascina, Pisa (IT)
(72) Inventor: Ruggieri, Alberto, 56025 Pontedera, Pisa (IT)
(74) Representative: Mannucci, Gianfranco, Dott.-Ing.

(56) References cited:
- EP-A- 0 562 216
- EP-A- 0 650 800
- US-A- 4 666 363
- US-A- 4 706 373
- US-A- 4 984 351

## Description

The invention relates to a machine tool for the machining of workpieces of elongate form, in particular ones made of wood, such as elements of chairs, tables or furniture in general, according to the preamble of claim 1.

A machine of this kind is known from US-A-4,666,363. In this known machine, a single support carries two pairs of cantilever arms. Each pair of arms is provided with means for clamping the workpiece to be machined. The latter is clamped in correspondence of the ends thereof. When one pair of arms is in the machining position, the other pair of arms is in a loading position. Upon completion of the working phase, the support is rotated around the axis thereof to move the finished workpiece from the working position and replace it with a new workpiece to be machined. The ends of the workpiece cannot be machined, because they are engaged by the clamping means. The operation is slow, since it is necessary to completely remove the machined workpiece from the working area and replace it with the new workpiece before starting a new machining cycle.

Presently known machine tools exhibit considerable versatility, being capable of machining the workpiece on at least two faces and at various inclinations. Nevertheless, the potential of the machine is often limited by the fact that the system for clamping the workpiece renders one or more faces of the workpiece inaccessible to machining. For example, in certain cases two of the lateral faces of the workpiece and the two end faces become inaccessible. This occurs in particular when the machine is of the multiple-chuck type, that is to say one with a chuck box which can carry several tools, because in such a case the chuck box is very bulky. Hence, the potential offered by the large number of numerically controlled axes and the number of tools on the spindle remains unused owing to the impossibility of bringing the machining head close to the workpiece.

A first object of the present invention is to produce a workpiece holder which is particularly suitable for application in combination with multichuck machine tools with several machining axes.

A second object of the present invention is the construction of a machine of the type indicated above, in which it is possible to machine the workpiece on at least four faces, two of which are the end faces of the elongate workpiece.

A further object of the present invention is the construction of a machine in which loading of the workpiece to be machined is simple, fast and safe.

A further object of the present invention is the construction of a machine with a workpiece holder which enables even exceptionally long workpieces to be machined.

These and other object and advantages, which will be clear to those skilled in the art on reading the following text, are achieved with the combination of features according to claim 1.

According to the invention, the workpiece holder has a support member on which cantilever arms are mounted and which moves a first series of cantilever arms and a second series of cantilever arms from a first or loading position to a second or machining position and back again. The length of the cantilever brackets or arms is sufficient to enable the multiple chuck to be brought close to all the faces to be machined, without the tools interfering with the support member.

By mounting the means for clamping the workpiece that is being machined on cantilever arms or brackets a space is created around the workpiece sufficient to allow even a large operating head to be brought close to the workpiece, for example a head of the type having a multiple chuck and preferably a cruciform chuck with four tools. This makes it possible to execute in rapid succession different types of machining (by virtue of the presence of several tools on the cruciform chuck) giving access to a large number of faces, up to five faces of the workpiece and in particular the two end faces especially. The possibility of moving the cantilever brackets or arms with their workpiece clamping means from the machining position (that is to say the position in which the workpiece is presented to the operating unit) to the loading position allows easy loading even in the case of very extended cantilever arms, required when using an operating head with a very bulky multiple chuck.

Advantageously, the machine has five machining axes, numerically controlled, so as to be able to reach four or five faces of the workpiece and be able to select the individual tools mounted on the multiple chuck, in particular a chuck with four tools arranged in a cross. A high rate of production is thereby obtained. Alternatively, it is possible to provide a double chuck, with an automatic tool-change set and a tool magazine, which are arranged in such a way that while one tool is machining, the tool-change set is replacing the opposing tool. All the movements along the five axes are imparted to the chuck box.

In order to be able to position and clamp a workpiece to be machined while the operating unit is machining, a second series of cantilever arms is provided, furnished with respective clamping means. The support member can carry the first series of cantilever arms in a machining position and the second series of cantilever arms in a loading position and vice versa, so that the loading operations take place off-line with respect to the machining and the productivity of the machine increases. When the workpiece is particularly long, it is possible to provide for the two series of arms to be adjusted such that they are aligned and moved simultaneously from the machining position to the loading position and vice versa.

The cantilever arms are movable from said machining position to said loading position by a pivoting movement or rotation about an axis orthogonal to the axes of said arms. This makes the structure of the workpiece holder particularly simple and compact. This type of movement is achieved by providing for the support member for the cantilever arms to comprise a crossbeam rotating or pivoting about its longitudinal axis, and for the cantilever arms to extend orthogonally to said longitudinal axis.

In order to be able to operate selectively with the two series angularly offset (so as to load a workpiece onto one series while another workpiece clamped on the second series is being machined), or not offset (so as to machine workpieces of greater length), it is provided for the support member to comprise two crossbeam portions, the first series of cantilever arms being arranged on a first crossbeam portion and the second series of cantilever arms being arranged on the second crossbeam portion, the angular positions of the two portions advantageously being adjustable with respect to each other.

The possibility is not excluded that various additional clamping systems, which do not project from the support, may be interposed between the cantilever arms so as to allow machining of panels rather than elongate pieces.

Additional advantageous features and embodiments of the machine according to the invention are set forth in the dependent claims.

The invention will be better understood by following the description and the appended drawing, which shows a practical non-limiting example of the said invention. In the drawing:
Fig. 1 shows an isometric view of the machine-tool with the workpiece holder;
Fig. 2 shows a section on II-II of Fig. 1;
Fig. 3 shows a partial plan view on III-III of Fig. 2;
Fig. 4 shows a plan view of a slightly modified embodiment; and
Fig. 5 shows a side view on V-V of Fig. 4.

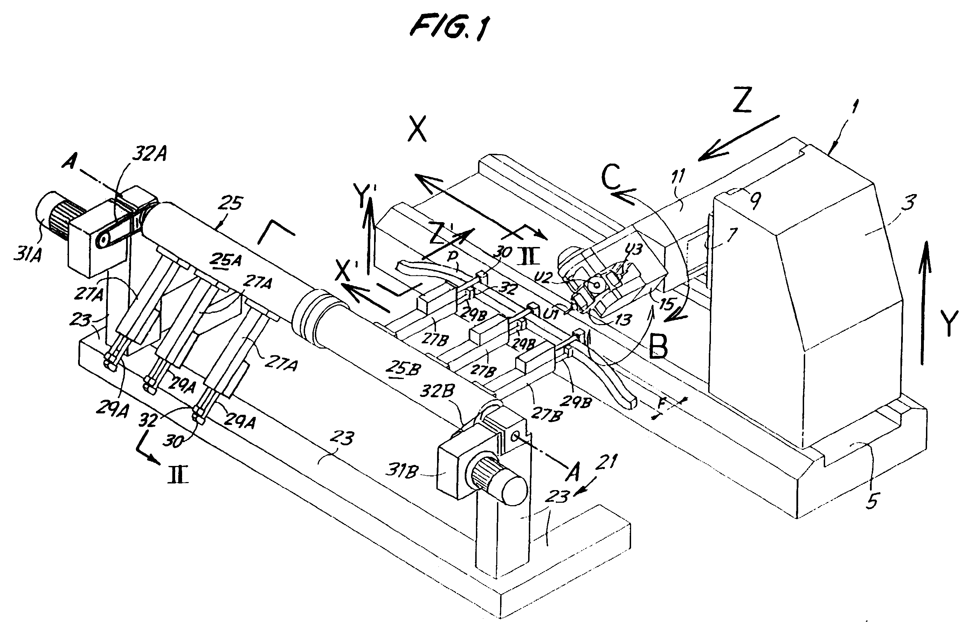

With initial reference to Fig. 1, the machine comprises an operating unit indicated generically as 1, which has a column 3 that can travel horizontally along a first machining axis (X) on a guide 5 and an actuator, not shown, for example a brushless motor or other actuator suitable for being controlled by a control unit.

The column 3 carries a slide 7 running in a guide 9 so as to move along a second vertical machining axis (Y). Provided on the slide is a guide for the head 11, which runs along a horizontal machining axis (Z), orthogonal to the axes (X) and (Y). The head 11 carries a chuck box 13 with multiple tools. In what follows the term "chuck" will denote the entire chuck box 13, i.e. the entire body carrying the various tools. The chuck is furnished, in the example of the drawing, with four tools U1, U2, U3 and U4, arranged in a cross, that is to say angled at 90° to one another. The multiple chuck 13 is carried by a support rig 15 and can rotate with respect to the support rig 15 about a machining axis (B) orthogonal to the axes of rotation of the tools U1-U4, while the support rig 15 can rotate, with respect to the head 11, about a machining axis (C). In the example illustrated the tools U1, U2, U3 and U4 are coplanar, but the possibility of this not being so is not excluded. For example, the opposing tools U2, U4 could be coplanar with each other while the tools U3 and U1 could have their axes lying in a different plane. This occurs when using two double chucks coupled together.

The machining axes X, Y, Z, B and C along which the chuck box 13 can move, are numerically controlled by a central control unit and enable the operating unit to machine the workpiece on four or even five faces, by virtue of the particular layout of the workpiece holder associated with the operating unit.

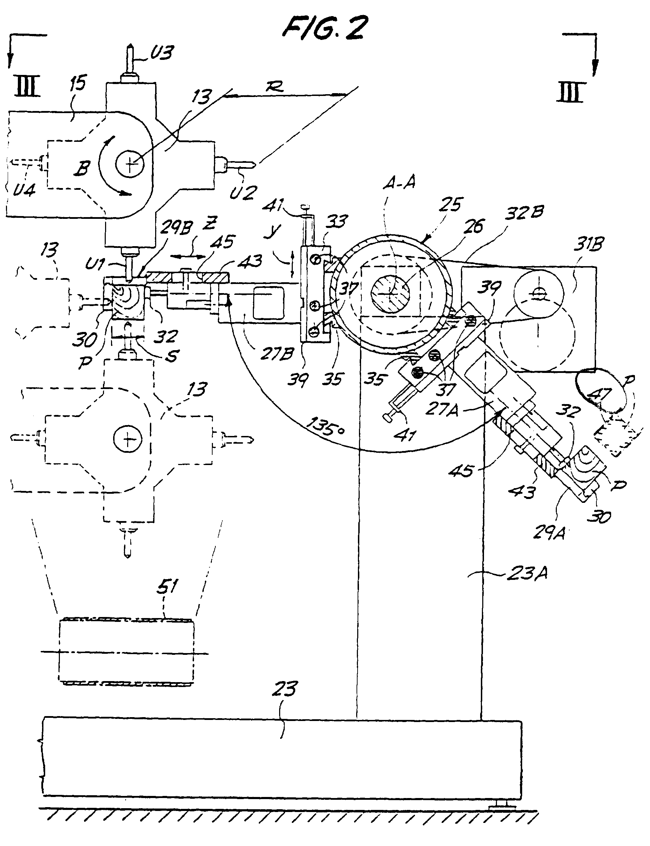

The workpiece holder associated with the operating unit 1 is indicated generically as 21 and has a frame 23 which supports a tubular crossbeam 25 made in two axially aligned portions 25A and 25B which can rotate independently of each other about a horizontal axis of rotation or pivoting A-A. More particularly, the two portions 25A, 25B are supported in a revolvable manner on a support bar 26 coaxial with the tubular portions 25A, 25B, which is visible in the section of Fig. 2, and which is fixed to the pillars 23A of the frame 23. The two tubular portions 25A, 25B are supported on the bar 26, each with appropriate bearings, in such a way as to be able to rotate with respect to the bar 26. The possibility is not excluded of supporting the two portions 25A and 25B in a different manner, for example by means of a bar parallel to the crossbeam 25, but external to it, with end supports and a double intermediate support.

Each portion 25A, 25B of the tubular crossbeam 25 carries, in the below-described manner, a plurality of cantilever arms 27A and 27B respectively, each furnished with respective clamping means 29A, 29B for clamping the workpiece while machining, sketched by way of indication in the figures and indicated as P. The cantilever arms 27A are oriented differently from the cantilever arms 27B and between the latter is defined an angle which in the example illustrated is around 135° (Fig. 2). Different values for said angle are not excluded. In this way, while the cantilever arms 27B are in the machining position (Fig. 1), in an approximately horizontal position, the cantilever arms 27A are in a loading position, where they can receive the next workpiece to be machined.

The two portions 25A and 25B of the tubular crossbeam 25 rotate independently of each other and can also be arranged to form a different angle to each other, so as for example to bring all the cantilever arms 27A and 27B into the same plane. This may be made necessary when the machine is required to work particularly long pieces.

The two portions 25A, 25B of the tubular crossbeam 25 are rotated or pivoted by two respective geared motors 31A, 31B via two drivebelts 32A, 32B, so as to bring the cantilever arms 27A; 27B and their respective clamping means 29A, 29B into one or other of the two positions of loading and machining respectively.

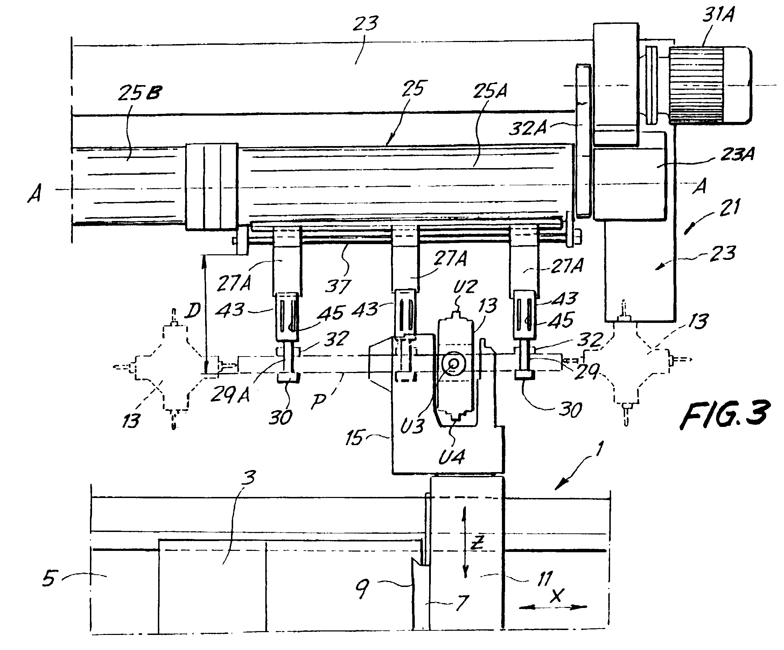

Visible in particular in Figs. 2 and 3 are the systems for adjusting the positions of the individual cantilever arms 27A, 27B and of the individual clamping means 29A, 29B. Adjustments may be made along three orthogonal axes of adjustment, indicated as X', Y' and Z' in Fig. 1, in such a way as to enable workpieces P of any shape to be gripped and clamped in the desired position. A respective slide 33 running along a dovetail guide 35 on a system of threaded bars 37 is provided for each cantilever arm. Each slide 33 is adjustable by means of its own threaded bar 37.

Each cantilever arm 27A, 27B is integral with a plate 39 adjustable, by means of a respective adjusting screw 41, along the vertical direction Y'. Furthermore, each fixed stop 30 of each clamping means 29A, 29B is integral with an adjustment plate 43, adjustable along the horizontal direction Z', orthogonal to the directions X' and Y' and can be clamped in the desired position by means of suitable clamping screws passing through a slot 45 in the plate 43. The travel of the movable stop 32 of each clamping means 29A, 29B is sufficient to clamp the workpiece P irrespective of its thickness and irrespective of the position of the fixed stop 30.

It is possible, with the cantilever arms 27A, 27B, to clamp the workpiece P in a position such as to allow it to be machined by the tools U1, U2, U3, U4 on all faces, with the exclusion of the single face facing towards the axis A-A of the tubular crossbeam. The lower face can also be excluded if in order to limit the bulkiness of the machine it is preferred to reduce the vertical dimension. Three possible positions of the multiple chuck for machining three of the four longitudinal surfaces of the workpiece P are indicated in solid lines and dashed lines in Fig. 2. Apart from these, by a sufficient translation of the column 3, and possibly a rotation of the chuck, it is possible to machine the end surfaces of the workpiece, as visible in plan view in Fig. 3, where the two positions adopted by the chuck 13 for machining the end faces of the workpiece P are shown dashed. The distance at which the workpiece P is fixed from the crossbeam 25 is such as to prevent the tools U1, U2, U3 and U4 from interfering with the workpiece support structure, and in particular with the crossbeam 25 and the threaded bars 37. This is achieved by arranging the stop 30 at a distance D (Fig. 3) from the crossbeam 25 and from the bars 37 greater than the sum of the radius R of rotation of the tools about the axis B (Fig. 2), the maximum thickness S of the workpiece P and the camber F of the workpiece (Fig. 1).

The individual workpieces P can be loaded manually onto the clamping means 29A or 29B temporarily in the loading position (the clamping means 29A in the position of Fig. 1) and then clamped manually or automatically. However, the layout of the device is such as to allow coupling with a feeder 47 of a type known per se. In this way the workpiece holder becomes an automatic loader.

Beneath the machining position of the workpiece P there is a conveyor belt 51 onto which the machined workpiece is dropped by opening the clamping means 29A or 29B. The forward motion of the belt 51 is parallel to the machining axis X.

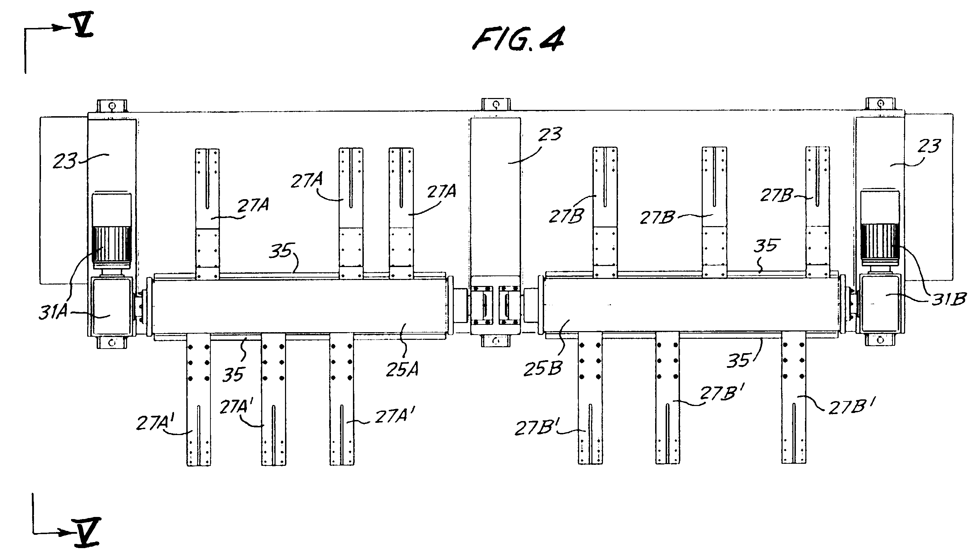

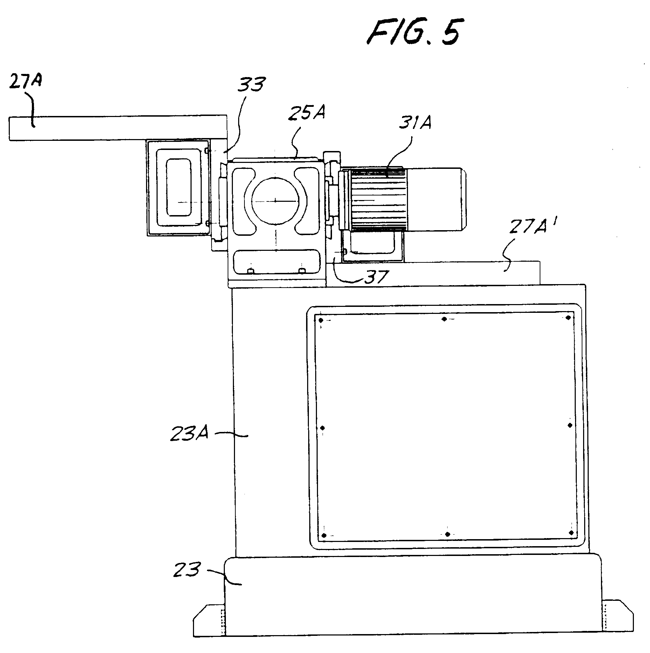

Figs. 4 and 5 show a variant embodiment of the machine according to the invention, in which identical numerals indicate parts identical to or corresponding with those of Fig. 1 to 3. Figs. 4 and 5 show the workpiece holder separately, the head of the machine being omitted for the simplicity of the drawing. In this implementation two series of cantilever arms 27A, 27A' and 27B, 27B', offset from each other by 180°, rather than 135°, are provided for each portion 25A, 25B of the crossbeam 25 (which in this case has a rectangular cross-section by way of example). With this arrangement it is possible to hold two workpieces in the machining position by locking them in the clamping means of the cantilever arms 27A, 27B, while the series of cantilever arms 27A', 27B' are in the loading and unloading position.

As clearly visible in Fig. 4, the cantilever arms of each series can be positioned differently from the arms of the other series, because the machine is able to work pieces of different shape and dimension in succession.

It is understood that the drawing shows only one example given purely as a practical demonstration of the invention, it being possible for this invention to vary in forms and arrangements within the scope of the claims. The presence of any reference numerals in the attached claims has the purpose of aiding the reading of the claims with reference to the description and to the drawing and does not limit the scope of the protection represented by the claims.

## Claims

1. A machine tool for machining workpieces (P) of elongate form, comprising a workpiece holder (21) for clamping the workpiece (P) to be machined, and an operating unit, wherein said workpiece holder (21) includes a support member (25) carrying at least a first and a second series of cantilever arms (27A, 27B) and moves said cantilever arms from a loading position to a machining position and vice-versa by a pivoting movement or a rotation about an axis (A-A) orthogonal to the axes of said cantilever arms, and wherein clamping means (29A, 29B) for clamping the workpiece (P) to be machined are arranged at the ends of said cantilever arms
characterised in that:
- said operating unit carries a chuck box (13) with multiple tools (U1, U2, U3, U4), said chuck box being controlled along a plurality of machining axes (X, Y, Z, B, C);
- the length and the position of said cantilever arms (27A, 27B) is such as to allow machining of the extremities of the workpiece without interference between the tools (U1, U2, U3, U4) and said support member (25),
- and said support member (25) includes two crossbeam portions (25A, 25B) the first series of cantilever arms (27A) being arranged on a first crossbeam portion (25A) and the second series of cantilever arms (27B) being arranged on a second crossbeam portion (25B), said first and said second series of cantilever arms being able to be angularly offset from one another.

2. Machine according to Claim 1, characterized in that said chuck box (13) has five controlled machining axes (X, Y, Z, B, C).

3. Machine according to Claim 1 or 2, characterized in that said chuck box (13) carries four tools (U1, U2, U3, U4).

4. Machine according to one or more of the preceding claims, characterized in that said two portions (25A, 25B) of said crossbeam (25) are angularly movable one with respect to the other around the longitudinal axis (A-A) so as to modify the angular position of said first series of cantilever arms (27A) with respect to said second series of cantilever arms (27B).

5. Machine according to one or more of the preceding claims, characterized in that each of said two portions (25A, 25B) of said crossbeam (25) carries two series of cantilever arms (27A, 27A'; 27B, 27B'), the two series of arms associated with each individual portion of crossbeam being angularly offset from one another.

6. Machine according to one or more of the preceding claims, characterized in that in the machining position said cantilever arms are arranged approximately horizontally.

7. Machine according to one or more of the preceding claims, characterized in that it comprises a conveyor belt (51) for the removal of the machined workpieces, said conveyor belt being arranged beneath said machining position of said cantilever arms.

8. Machine according to one or more of the preceding claims, characterized in that each individual clamping means (29A; 29B) is adjustable along three orthogonal axes of adjustment (X', Y', Z').

9. Machine according to Claim 8, characterized in that each cantilever arm (27A; 27B) is integral with a vertically adjustable (Y') plate (39), which in turn is carried by a slide (33) adjustable parallel to the axis (A-A) of rotation or pivoting of the arms.

10. Machine according to Claims 9, characterized in that each of said slides (33) is adjustable along a direction parallel to said axis (A-A) of rotation or pivoting of the cantilever arms on a respective threaded bar (37) running parallel to said support member (25).

11. Machine according to one or more of the preceding claims, characterized in that it has a workpiece loader (47) arranged near the loading position of said clamping means (29A; 29B).

## Patentansprüche

1. Werkzeugmaschine zum Bearbeiten von länglichen Werkstücken (P), mit einem Werkstückhalter (21) zum Klemmen des zu bearbeitenden Werkstückes (P) und einer Betriebseinheit, wobei der Werkstückhalter (21) ein Halteelement (25) umfasst, das wenigstens eine erste und eine zweite Reihe von Auslegearmen (27A; 27B) trägt und die Auslegerarme durch eine Schwenkbewegung oder eine Umdrehung um eine Achse (A-A) rechtwinkelig zur Achse der Auslegerarme von einer Ladeposition in einer Bearbeitungsposition und umgekehrt bewegt, und wobei Klemmittel (29A, 29B) zum Klemmen des zu bearbeitenden Werkstückes (P) an den Enden der Auslegerarme angeordnet sind,
dadurch **gekennzeichnet**, daß
- die Betriebseinheit einen Spannfutterkopf (13) mit mehreren Werkzeugen (U1, U2, U3, U4) hat, wobei der Spannfutterkopf (13) bezogen auf meherere Bearbeitungsrichtungen (X, Y, Z, B, C) gesteuert werden kann;
- die Länge und Position der Auslegerarme (27A; 27B) so ist, daß ein Bearbeiten der Enden des Werkstückes möglich ist, ohne daß sich die Werkzeuge (U1, U2, U3, U4) und das Halteelement (25) gegenseitig beeinträchtigen,
- und das Halteelement (25) zwei Querbalkenteile (25A, 25B) hat, wobei die erste Reihe Auslegerarme (27A) an einem ersten Querbalkenteil (25A) angeordnet ist und die zweite Reihe Auslegerarme (27B) an einem zweiten Querbalken (25B) angeordnet ist, wobei die erste und die zweite Reihe Auslegerarme gegeneinander im Winkel versetzt werden können.

2. Maschine nach Anspruch 1,
dadurch **gekennzeichnet,** daß der Spannfutterkopf (13) fünf gesteuerte Bearbeitungsrichtungen (X, Y, Z, B, C) hat.

3. Maschine nach Anspruch 1 oder 2,
dadurch **gekennzeichnet,** daß der Spannfutterkopf (13) vier Werkzeuge (U1, U2, U3, U4) trägt.

4. Maschine nach einem oder mehreren der vorstehenden Ansprüche, dadurch **gekennzeichnet,** daß die zwei Teile (25A, 25B) des Querbalken (25) zueinander im Winkel um die Längsachse (A-A) bewegbar sind, um die Winkelposition der ersten Reihe der Auslegerarme (27A) mit Bezug auf die der zweiten Reihe Auslegerarme (27B) zu modifizieren.

5. Maschine nach einem oder mehreren der vorstehenden Ansprüche, dadurch **gekennzeichnet,** daß jeder der zwei Teile (25A, 25B) des Querbalkens (25) zwei Reihen von Auslegerarmen (27A, 27A'; 27B, 27B') trägt, wobei die zwei Reihen Arme, die jeweils einem bestimmten Teil des Querbalkens zugeordnet sind, zueinander im Winkel versetzt sind.

6. Maschine nach einem oder mehreren der vorstehenden Ansprüche, dadurch **gekennzeichnet,** daß die Auslegerarme in der Bearbeitungsposition ungefähr horizontal angeordnet sind.

7. Maschine nach einem oder mehreren der vorstehenden Ansprüche, dadurch **gekennzeichnet,** daß ein Förderband (51) zum Entfernen der bearbeiteten Werkstücke aufweist, wobei das Förderband unterhalb der Bearbeitungsposition der Auslegerarme angeordnet ist.

8. Maschine nach einem oder mehreren der vorstehenden Ansprüche, dadurch **gekennzeichnet,** daß jedes einzelne Klemmteil (29A, 29B) in drei rechtwinkelig zueinanderstehenden Einstellrichtungen (X', Y', Z') einstellbar ist.

9. Maschine nach Anspruch 8,
dadurch **gekennzeichnet,** daß jeder Auslegerarm (27A, 27B) einstückig mit einer vertikal einstellbaren (Y') Platte (39) ausgebildet ist, die ihrerseits von einem Schlitten (33) getragen wird, der parallel zur Dreh- oder Schwenkachse (A-A) der Arme einstellbar ist.

10. Maschine nach Anspruch 9,
dadurch **gekennzeichnet,** daß jeder der Schlitten (33) in einer Richtung parallel zur Dreh- oder Schwenkachse (A-A) der Auslegerarme auf einer entsprechenden Spindel (37) einstellbar ist, die parallel zu dem Halteelement (25) läuft.

11. Maschine nach einem oder mehreren der vorstehenden Ansprüche, **gekennzeichnet** durch eine Werkstückladeeinrichtung (47), die in der Nähe der Ladeposition der Klemmittel (29A, 29B) angeordnet ist.

## Revendications

1. Machine-outil pour usiner des pièces à usiner (P) de forme allongée, comportant un porte-pièces à usiner (21 pour brider la pièce (P) à usiner, et un organe de travail, dans laquelle ledit porte-pièces (21) comprend un élément support (25) portant au moins une première et une seconde séries de bras en porte-à-faux (27A, 27B) et fait passer lesdits bras en porte-à-faux d'une position de chargement et à une position d'usinage et vice versa par un mouvement de pivotement ou une rotation autour d'un axe (A-A) orthogonal aux axes desdits bras en porte-à-faux, et dans laquelle des moyens de bridage (29A, 29B) prévus pour brider la pièce à usiner (B) sont disposés aux extrémités desdits bras en porte-à-faux,
caractérisée par le fait que
- ledit organe de travail porte une tourelle porte-outils (13) présentant de multiples outils (U1, U2, U3, U4), ladite tourelle porte-outils étant commandée selon une pluralité d'axes d'usinage (X, Y, Z, B, C);
- la longueur et la position desdits bras en porte-à-faux (27A, 27B) sont telles qu'elles permettent l'usinage des extrémités de la pièce à usiner sans interférence entre les outils (U1, U2, U3, U4) et ledit élément support (25),
- et ledit élément support (25) inclut deux portions de traverse (25A, 25B), la première série de bras en porte-à-faux (27A) étant disposée sur une première portion de traverse (25A) et la seconde série de bras en porte-à-faux (25B) étant disposée sur une seconde portion de traverse (25B), ladite première et ladite seconde séries de bras en porte-à-faux pouvant être angulairement décalées l'une de l'autre.

2. Machine-outil selon la revendication 1, caractérisée par le fait que ladite tourelle porte-outils (13) a cinq axes d'usinage commandés (X, Y, Z, B, C).

3. Machine-outil selon la revendication 1 ou 2, caractérisée par le fait que ladite tourelle porte-outils (13) porte quatre outils (X, Y, Z, B, C).

4. Machine-outil selon une ou plusieurs des revendications précédentes, caractérisée par le fait que les deux dites portions (25A, 25B) de ladite traverse (25B) peuvent se déplacer angulairement l'une par rapport à l'autre autour de l'axe longitudinal (A-A) de façon à modifier la position angulaire de ladite première série de bras en porte-à-faux (27A) par rapport à ladite seconde série de bras en porte-à-faux (27B).

5. Machine-outil selon une ou plusieurs des revendications précédentes, caractérisée par le fait que chacune des deux dites portions (25A, 25B) de ladite traverse (25) porte deux séries de bras en porte-à-faux (27A, 27A'; 27B, 27B'), les deux séries de bras associées à chaque portion individuelle de la traverse étant angulairement décalées l'une de l'autre.

6. Machine-outil selon une ou plusieurs des revendications précédentes, caractérisée par le fait qu'en position d'usinage lesdits bras en porte-à-faux sont disposés approximativement horizontalement.

7. Machine-outil selon une ou plusieurs des revendications précédentes, caractérisée par le fait qu'elle comporte un tapis transporteur (51) pour l'enlèvement des pièces, usinées, ledit tapis transporteur étant disposé sous ladite position d'usinage desdits bras en porte-à-faux.

8. Machine-outil selon une ou plusieurs des revendications précédentes, caractérisée par le fait que chaque moyen de bridage individuel (25A, 25B) est réglable selon trois axes orthogonaux de réglage (X', Y', Z').

9. Machine-outil selon la revendication 8, caractérisée par le fait que chaque bras en porte-à-faux (27A; 27B) est solidaire d'une plaque (39) réglable verticalement (Y') qui, à son tour, est portée par un coulisseau (33) réglable parallèlement à l'axe (A-A) de rotation ou de pivotement des bras.

10. Machine-outil selon la revendication 9, caractérisée par le fait que chacun desdits coulisseaux (33) est réglable selon une direction parallèle audit axe (A-A) de rotation de pivotement des bras en porte-à-faux sur une barre filetée respective (37) disposée parallèlement audit élément support (25).

11. Machine-outil selon une ou plusieurs des revendications précédentes, caractérisée par le fait qu'elle comporte un chargeur (47) de pièce à usiner disposé près de la position de chargement desdits moyens de bridage (29A; 29B).
